**Europäisches Patentamt**

**European Patent Office**

**Office européen des brevets**

(19)

(11) Veröffentlichungsnummer: **0 060 346
B1**

(12) **EUROPÄISCHE PATENTSCHRIFT**

(45) Veröffentlichungstag der Patentschrift:
02.05.85

(51) Int. Cl.⁴: **B 01 D 29/00**, B 01 F 13/08,
B 01 D 13/00

(21) Anmeldenummer: 81110612.9

(22) Anmeldetag: 18.12.81

(54) Druckfiltrationsgerät.

(30) Priorität: 12.03.81 DE 3109472

(43) Veröffentlichungstag der Anmeldung:
22.09.82 Patentblatt 82/38

(45) Bekanntmachung des Hinweises auf die Patenterteilung:
02.05.85 Patentblatt 85/18

(84) Benannte Vertragsstaaten:
CH FR LI

(56) Entgegenhaltungen:
DE - A - 2 657 030
FR - A - 2 247 279
US - A - 3 539 155
US - A - 4 082 668

(73) Patentinhaber: Carl Schleicher & Schüll GmbH & Co.
KG, Grimsehlstrasse 23, D-3352 Einbeck (DE)

(72) Erfinder: Hein, Wolfgang, Dr. Chem, Hahnestrasse 9,
D-3354 Dassel (DE)

(74) Vertreter: Jaeger, Klaus, Dr., JAEGER & PARTNER
Patentanwälte Bergstrasse 48 1/2,
D-8035 München-Gauting (DE)

## Beschreibung

Die Erfindung betrifft ein Druckfiltrationsgerät der im Oberbegriff des Anspruchs 1 genannten Art.

Druckfiltrationsgeräte dieser Art sind Laboratoriumsgeräte zum Filtrieren von Flüssigkeitsvolumen in der Grössenordnung von einigen 10 bis zu einigen 100 Millilitern. Der Aufgussraum, also der Druckraum des Druckfiltrationsgerätes, hat gebräuchlicherweise ein Volumen im Bereich von ungefähr 10 ml bis zu ungefähr 300 ml.

Zur störungsfreien Filtration mit solchen Geräten, insbesondere wenn das Filter eine Membran ist, muss ein Druckfiltrationsgerät dieser Art mit einem Rührwerk versehen sein. Als Rührwerk dient fast ausschliesslich ein Magnetrührwerk mit einer unter der Zelle angeordneten Rührplatte und einem in der Zelle angeordneten Magnetrührer. Der Magnetrührer ist im Aufgussraum entweder drehbar aufgehängt gelagert oder liegt frei auf dem Boden des Aufgussraumes. Um bei Verwendung eines frei auf dem Boden des Aufgussraumes liegenden Magnetrührkerns das Filter nicht zu beschädigen, ist bekannt, unmittelbar oberhalb der türbseitigen Membranoberfläche eine dünne teflonisierte Unterlegscheibe vorzusehen. Diese als Siebplatte ausgebildete Stützplatte oder Trägerplatte für den Magnetrührkern liegt ihrerseits lose auf der Membranoberfläche auf.

Nachteilig an der Druckfiltrationszelle mit teflonisierter Siebstützplatte für den Magnetrührkern ist, dass durch das Aufliegen der Siebstützplatte die effektive Filterfläche verkleinert wird, dass die trübseitige Oberfläche des Filters durch eine unvermeidbare Eigenbewegung der Siebstützplatte in nachteiliger Weise mechanisch beansprucht wird und dass die Siebstützplatte ein zusätzliches separates Bauteil des Druckfiltrationsgerätes bildet, das separat gereinigt, gewartet, gepflegt und beim Zusammenbau parat sein und eingesetzt und justiert werden muss.

Nachteilig an den mit einer Aufhängung für den Magnetrührkern ausgerüsteten Druckfiltrationszellen ist der konstruktive Aufwand, der für solche Aufhängungen hingenommen werden muss. Die Aufhängungen sind an axialen Stäben und Führungen angeordnet, die ihrerseits an der Oberseite des Mittelteils des Druckfiltrationsgerätes gehaltert sind. Solche Vorrichtungen sind auf Grund der wirksamen langen Hebelarme nicht nur konstruktiv anfällig, sondern bei zu filtrierenden aggressiven Medien auch im Hinblick auf ihre Korrosionsanfälligkeit nicht unbedenklich. Sie sind schliesslich aufwendig in der Wartung und Reinigung.

Darüber hinaus weisen Druckfiltrationsgeräte für Magnetrührung, die in der Fachsprache auch kurz als «Rührzellen» bezeichnet werden, den Nachteil auf, für die Filtration kleiner Volumina, beispielsweise für die Filtration von Flüssigkeitsmengen mit einem Volumen von kleiner als beispielsweise 3 bis 5 ml, völlig ungeeignet zu sein. Für die Filtration derart kleiner Mengen müssen gesonderte Filtrationsgeräte anderer Bauart, in der Regel flacher Bauart, bereitgehalten werden. Dies erfordert eine zusätzliche Geräteinvestition und verteuert den Kostenaufwand zur Durchführung von Trennarbeiten und Reinigungsarbeiten im Laboratorium.

Angesichts dieses Standes der Technik liegt der Erfindung die Aufgabe zugrunde, ein Druckfiltrationsgerät der eingangs genannten Art dahingehend zu verbessern, dass das Gerät für den Magnetrührbetrieb keine kostenaufwendigen und umständlich zu handhabenden und konstruktiv anfällige Zusatzteile oder Hilfskonstruktionen erfordert und dass das Gerät zusätzlich auch zur Filtration kleiner und kleinster Volumina geeignet ist.

Zur Lösung dieser Aufgabe wird ein Druckfiltrationsgerät der eingangs genannten Art vorgeschlagen, das erfindungsgemäss die im kennzeichnenden Teil des Anspruchs 1 genannten Merkmale sowie die im kennzeichnenden Teil des Anspruchs 2 genannten Merkmale aufweist.

Das Druckfiltrationsgerät der Erfindung weist also ein zylindrisches Mittelteil mit einer einstückig mit diesem ausgebildeten Scheibe, insbesondere Siebscheibe, als Trägerplatte für den Magnetrührkern auf, wobei das Oberteil und das Unterteil des Druckfiltrationsgerätes, die an der Oberseite und an der Unterseite des Mittelteils mit diesem druckdicht verbindbar sind, so ausgestaltet sind, dass sie auch ohne Zwischenteil unmittelbar miteinander unter Bildung einer Druckfiltrationszelle flacher Bauart verbindbar sind. Die den Magnetrührkern tragende Scheibe ist dabei so im zylindrischen Mittelteil angeordnet, dass sie bei angesetztem Unterteil und eingelegtem Filter unmittelbar oberhalb der trübseitigen Oberfläche des Filters angeordnet ist, diesen aber an keiner Stelle berührt, das heisst also, dass sie so angeordnet ist, dass zwischen der dem Filter zugekehrten Unterseite der Scheibe und der trübseitigen Oberfläche des Filters ein flacher scheibenförmiger freier Raum verbleibt.

Die Verbindungselemente, mit denen das Oberteil mit dem Mittelteil bzw. dem Unterteil und das Mittelteil mit dem Unterteil verbindbar sind, sind vorzugsweise Schraubgewinde in Verbindung mit gebräuchlichen gummielastischen Dichtungselemente, beispielsweise Dichtungsringen oder einvulkanisierten Dichtungsmassen. Beispielsweise ist das Oberteil deckelartig mit teleskopartig über den oberen Rand des Mittelteils übergreifender herabgezogener Zarge ausgebildet, wobei die herabgezogene Zarge ein Innengewinde und der obere Aussenrand des Mittelteils ein komplementäres Aussengewinde trägt. Das untere Ende des Mittelteils ist mit einem Innengewinde versehen, in das das mit einem Aussengewinde versehene Unterteil druckdicht einschraubbar ist. Dabei ist dieses Aussengewinde des Unterteils auch direkt in das Innengewinde der Zarge des Oberteils einschraubbar. Die den oberen Rand des Mittelteils gegenüber dem Oberteil abdichtenden Dichtungselemente sind so ausgebildet, dass sie beim direkten Ineinanderschrauben des Oberteils und des Unterteils das in das Unterteil eingelegte Filter druckdicht einspannen.

Sämtliche Teile des Druckfiltrationsgerätes bestehen vorzugsweise aus Kunststoff und sind für Arbeitsdrücke im Bereich zwischen ungefähr 5 und 20 bar ausgelegt.

Das Unterteil des Druckfiltrationsgerätes weist vorzugsweise einen axial nach unten vorspringenden Filtrationsablaufstutzen auf. Bei Betrieb des Druckfiltrationsgerätes ohne Mittelteil kann das dabei erhaltene flache Druckfiltrationsgerät beispielsweise in an sich bekannter und gebräuchlicher Weise direkt als Spritzenvorsatz mit axialem Filtratablauf benutzt werden. Zur Filtration grösserer Volumina bei zwischengefügtem Mittelteil und Magnetrührbetrieb wird der axiale Filtratablaufstutzen des Unterteils starr und dicht mit einem Fussteil verbunden, das dem Druckfiltrationsgerät Standfestigkeit verleiht und das Filtrat durch einen im Fuss ausgebildeten Kanal zu einem radial angeordneten Filtratablaufstutzen leitet. Durch Verwendung eines solchen Fusses können trotz des axialen Filtrationsablaufs am Unterteil des Druckfiltrationsgerätes relativ kurze Rührabstände zwischen der Rührplatte und dem Magnetrührkern eingehalten werden.

Die Erfindung ist im folgenden an Hand eines Ausführungsbeispiels in Verbindung mit der Zeichnung näher erläutert. Es zeigt die einzige Figur, nämlich die

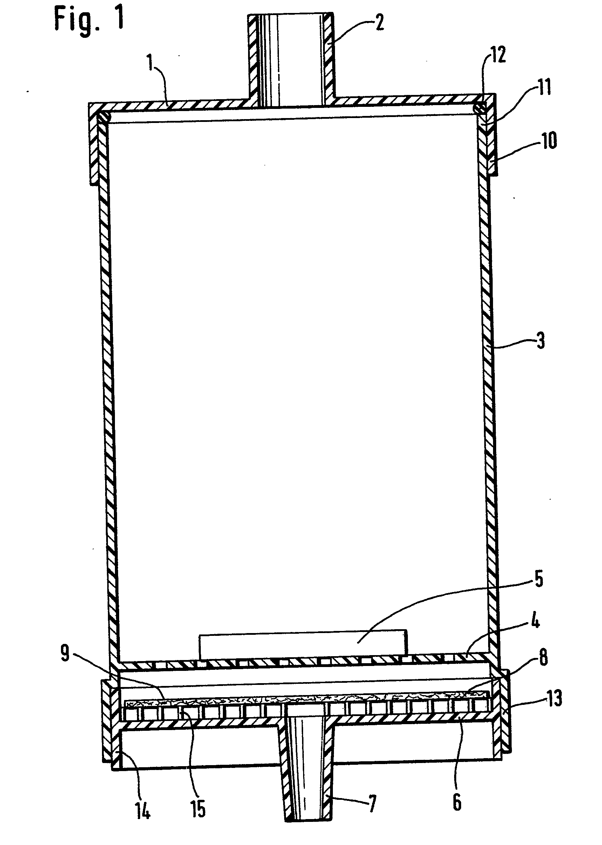

Fig. 1 ein Ausführungsbeispiel des Druckfiltrationsgerätes in stark schematisierter Darstellung im Axialschnitt.

Das in der Fig. 1 gezeigte Druckfiltrationsgerät besteht aus einem Oberteil 1, einem Mittelteil 3 und einem Unterteil 6.

Im Oberteil 1 ist eine Öffnung mit einem Stutzen 2 axial und mittig ausgebildet. Der Stutzen 2 dient dem Zulauf der Trübe und gleichzeitig der Druckbeaufschlagung des Druckfiltrationsgerätes. Das Oberteil 1 ist mit einem nach Art einer Zarge aussen herabgezogenen Rand 10 ausgebildet, der von aussen teleskopartig den oberen Rand 11 des Mittelteils 3 des Druckfiltrationsgerätes übergreift. Der Rand 11 des Mittelteils 3 ist mit einem in der Figur nicht dargestellten Aussengewinde versehen, während die Zarge 10 des Oberteils 1 mit einem in der Figur ebenfalls nicht dargestellten Innengewinde versehen ist. Das Oberteil 1 ist auf den oberen Rand 11 des Mittelteils 3 aufgeschraubt und gegen diesen durch einen schematisch angedeuteten gummielastischen Dichtungsring 12 abgedichtet.

Der untere Rand 13 des Mittelteils 3 weist einen Durchmesser 13 auf, der geringfügig grösser als der Durchmesser des oberen Randes 11 des Mittelteils 3 und im wesentlichen gleich dem Durchmesser der Zarge 10 des Oberteils 1 ist. In diesem unteren Rand 13 trägt das Mittelteil 3 ein Innengewinde, das in seiner Ausbildung und seinen Kenndaten dem Innengewinde entspricht, das in der Zarge 10 des Oberteils 1 eingeschnitten ist. Der deutlicheren Darstellung halber ist das im unteren Rand 13 des Mittelteils 3 ausgebildete Innengewinde in der Figur nicht dargestellt.

Das Unterteil 6 weist einen zylindrischen Aussenrand 14 auf, der ein ebenfalls in der Figur nicht dargestelltes Aussengewinde trägt, das in seiner Abmessung und seinen Kenndaten dem Aussengewinde entspricht, das am oberen Rand 11 des Mittelteils 3 ausgebildet ist. Der Aussenrand 14 ist mit seinem Aussengewinde in das Innengewinde eingeschraubt, das im unteren Rand 13 des Mittelteils 3 ausgebildet ist. Der deutlicheren Darstellung halber sind die in an sich bekannter und gebräuchlicher Weise angeordneten Dichtelemente, die das Unterteil 6 und das auf diesem abgestützte Filter 8 gegen das Mittelteil 3 druckdicht abdichten, nicht dargestellt. Das Filter 8 liegt auf einer gebräuchlichen Filterunterstützung 15, die einstückig mit dem Unterteil 6 ausgebildet ist, aber auch separat ausgebildet sein kann. Von der Unterseite des Filters 8 ablaufendes Filtrat kann durch die Filterunterstützung 15 hindurch in einem Filtratablaufstutzen 7 und aus diesem aus dem Druckfiltrationsgerät heraus ablaufen.

Dicht oberhalb der trübseitigen Oberfläche 9 des Filters 8, das in der Regel eine Membran ist, ist einstückig mit dem aus Kunststoff bestehenden Mittelteil 3 eine Siebscheibe 4 ausgebildet, auf der ein Magnetrührkern 5 frei beweglich aufliegt. Der Abstand zwischen der Unterseite der Siebscheibe 4 und der trübseitigen Oberfläche 9 des Filters 8 ist prinzipiell so gering wie möglich gehalten, jedoch gleichzeitig so gross wie nötig, um weder die trübseitige Oberfläche 9 des Filters 8 zu berühren, und zwar auch dann nicht zu berühren, wenn das Filter 8 verworfen auf der Filterunterstützung 15 liegt, wobei eine Berührung auch dann ausgeschlossen sein soll, wenn sich auf der trübseitigen Oberfläche 9 des Filters 8 eine Rückstandsschicht bildet.

Um das aus dem Oberteil 1, dem Mittelteil 3 und dem Unterteil 6 zusammengesetzte Druckfiltrationsgerät als Standgerät auf einer Rührplatte betreiben zu können, wird der Filtratablaufstutzen 7 des Unterteils 6 in einen komplementär konisch ausgebildeten Anschlussstützen eines Fusses oder Stativs eingesteckt, der in der Figur nicht dargestellt ist. Der Anschlussstutzen des Fusses ist über einen Durchlasskanal mit einem radial angeordneten Filtratablaufstutzen verbunden.

Zum nichtstationären Betrieb des in der Fig. 1 gezeigten Druckfiltrationsgerätes, beispielsweise zum Betrieb dieses Gerätes als Spritzenvorsatz zum Filtrieren kleiner Volumina, für deren Filtration eine Magnetrührung nicht erforderlich ist, wird das Mittelteil 3 entfernt und das Oberteil 1 mit dem an der Zarge 10 ausgebildeten Innengewinde unmittelbar auf das Aussengewinde aufgeschraubt, das auf dem zylindrischen Aussenrand 14 des Unterteils 6 ausgebildet ist. Die Dichtung des Oberteils gegenüber dem Filter 8 und dem Unterteil 6 erfolgt in an sich bekannter Weise durch Zwischenfügen von Dichtungselementen, beispielsweise durch Zwischenfügen eines gummielastischen Dichtungsringes.

**Patentansprüche**

1. Druckfiltrationsgerät für Magnetrührung, bestehend aus einem Oberteil, einem zylindrischen Mittelteil und einem Unterteil, die druckdicht miteinander verbindbar sind, wobei im Oberteil Öffnungen für die Druckbeaufschlagung und den Zulauf ausgebildet sind, das Unterteil eine Filterunterstützung und einen Filtratablauf aufweist, das Filter zwischen dem Mittelteil und dem Unterteil druckdicht einspannbar ist und unmittelbar oberhalb der trübseitigen Filteroberfläche eine Scheibe als Siebplatte angeordnet ist, auf die ein Magnetrührkern so auflegbar ist, dass er die trübseitige Filteroberfläche nicht berührt, dadurch gekennzeichnet, dass die Scheibe (4) einstückig mit dem Mittelteil (3) ausgebildet ist und die trübseitige Oberfläche (9) des Filters (8) nicht berührt, wenn das Druckfiltrationsgerät (1, 3, 6) betriebsbereit zusammengesetzt ist.

2. Druckfiltrationsgerät nach Anspruch 1, dadurch gekennzeichnet, dass das Oberteil (1) und das Unterteil (6) so ausgebildete Verbindungsorgane aufweisen, dass sie unter Bildung einer Druckfiltrationszelle flacher Bauart auch direkt druckdicht miteinander verbindbar sind.

3. Druckfiltrationsgerät nach Anspruch 1 oder 2, dadurch gekennzeichnet, dass die Verbindungsorgane zum druckdichten Verbinden der Teile des Druckfiltrationsgerätes miteinander Schraubgewinde in Kombination mit gummielastischen Dichtungselementen sind.

## Revendications

1. Dispositif de filtration sous pression pour brassage magnétique, comprenant une partie supérieure, une partie médiane cylindrique et une partie inférieure qui peuvent être reliées les unes aux autres d'une manière étanche à la pression, la partie supérieure comportant des orifices pour l'application de la pression et l'arrivée des produits, la partie inférieure comportant un support de filtre et un orifice d'évacuation du filtrat et le filtre intercalé entre la partie médiane et la partie inférieure pouvant être monté d'une manière étanche à la pression et un disque constituant la plaque de filtre étant placé immédiatement au-dessus de la surface de filtre, du côté du trouble à filtrer, un noyau d'agitateur magnétique étant disposé sur lui de telle manière qu'il ne soit pas en contact avec la surface du filtre du côté du trouble à filtrer, caractérisé en ce que le disque (4) est réalisé d'une seule pièce avec la partie médiane (3) et ne touche pas la surface (9) du filtre (8) située du côté du trouble à filtrer lorsque l'appareil de filtration sous pression complet (1, 3, 6) est monté et prêt à fonctionner.

2. Dispositif de filtration sous pression selon la revendication 1, caractérisé en ce que la partie supérieure (1) et la partie inférieure (6) sont constituées de telle manière que, pour la réalisation d'une cellule de filtration sous pression de forme surbaissée ou aplatie, elles peuvent être assemblées directement l'une à l'autre en assurant l'étanchéité à la pression.

3. Dispositif de filtration sou pression selon l'une des revendications 1 ou 2, caractérisé en ce que les organes de liaison assurant l'assemblage, avec étanchéité à la pression, des différentes parties de l'appareil de filtration sous pression sont des filetages associés à des éléments en caoutchouc élastique.

## Claims

1. A pressure-filtration apparats for magnetic stirring operation comprising an upper part, a cylindrical center part and a lower part detachably secured to each other with a pressure-tight securement, inlet means for pressurizing the apparatus and for the feed, respectively, on said upper part, a filter support and on outlet means for the filtrate formed on said lower part, a filter element, which can be disposed between said center part and said lower part in a pressure-tight manner and a disc plate being a foraminous plate formed close above the inlet-side surface of the filter element, a magnetic stirring means being placed on said disc plate so that the inlet-side surface of the filter element does not contact said magnetic stirring means characterized in that said disc plate (4) is formed integrally with the center part (3) and does not contact the inlet-side surface (9) of the filter element (8), when the pressure-filtration apparatus (1, 3, 6) is assembled ready for operation.

2. A pressure-filtration apparatus according to claim 1, characterized in that said upper part (1) and said lower part (6) comprise connecting means formed in such a way that they can also be connected directly with each other thus forming a pressure filtration cell of a flat construction.

3. A pressure-filtration apparatus according to one of the claims 1 or 2, characterized in that said connecting means by which the parts of the pressure-filtration apparatus can be connected in a pressure-tight manner are threads in combination with rubber-elastic sealing elements.

**Fig. 1**